# EUROPEAN PATENT APPLICATION

(11) **EP 1 445 684 A1**
(43) Date of publication of application: **11.08.2004**
(21) Application number: 03250694.1
(22) Date of filing: 04.02.2003
(51) Int. Cl.: G06F 1/32, G06F 1/26

(54) **Energy-saving electronic device and energy-saving method for use with same**

(71) Applicant: Culture.com Technology (Macau) Ltd, Macau (CN)
(72) Inventor: Chi, Feng Chia, Macau (CN)
(74) Representative: Williams, Paul Edwin

(57) **Abstract**

An energy-saving electronic device (2) and an energy-saving method for use with the same are provided. Under a triggering condition by an input signal, a trigger module (4) produces a control pulse that urges a system-board module switch (7) to be switched on, such that a microprocessor or central processing unit (CPU) operates with power supplied from a power module (6) through the system-board module switch, and forwards a control signal to the trigger module for allowing the system-board module switch to be in a stable switching-on condition. When the input signal ends and thus the control pulse terminates, the microprocessor or CPU stops the control signal to the trigger module, and the system-board module switch is adapted to be switched off with no power being provided from the power module to the microprocessor or CPU, thus making the microprocessor or CPU in a complete power cut-off mode instead of a sleep mode in favour of power saving.

## Description

### FIELD OF THE INVENTION

The present invention relates to energy-saving electronic devices and energy-saving methods for use with the same, and more particularly, to an energy-saving electronic device having a microprocessor or central processing unit (CPU), whereby the microprocessor or CPU operates under effect of an input signal, and is adapted to be in a complete power cut-off mode as the input signal terminates, instead of a sleep mode in favor of power saving.

### BACKGROUND OF INVENTION

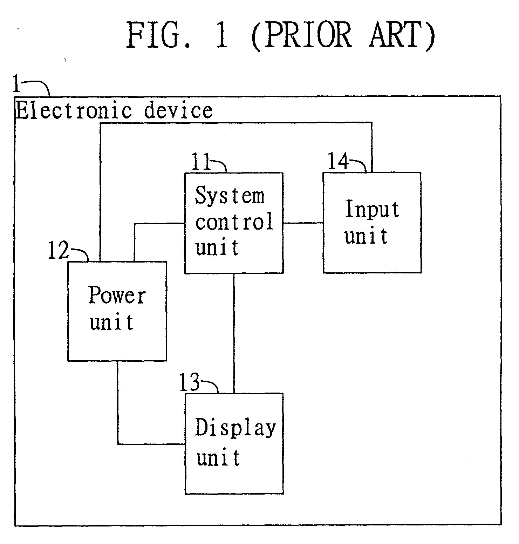

A conventional electronic device 1 having a microprocessor or central processing unit (CPU), as shown in FIG. 1, can be for example, a personal computer, notebook computer, personal digital assistant (PDA), electronic-book (e-book) reader, etc. Under a normal operating condition, a system control unit 11 having the microprocessor or CPU of the electronic device 1, obtains power from a power unit 12 and thus operates at a full speed. And, a display unit 13 of the electronic device 1 also obtains power from the power unit 1 for picture display; the display unit 13 can be a cathode-ray tube (CRT), liquid crystal display (LCD), etc. When an input unit 14, such as a keyboard, touch board or mouse, does not forward any input signal to the system control unit 11, or the system control unit 11 finishes scheduled work, the electronic device 1 is adapted to be in an idle mode. For the sake of power saving, the system control unit 11 reduces power supplied to the display unit 13 for making the display unit 13 in the idle mode, or shuts down the power supply, so as to allow the microprocessor or CPU and thus the electronic device 1 to be in a sleep mode. On the other hand, when the input unit 14 forwards an input signal to the system control unit 11, the system control unit 11 is restored back to full-speed operation, and the display unit 13 can regain power for picture display.

In the case of the electronic device 1 being a personal computer, with public electricity as a power source, there should be no concern of insufficiency in power supply. Nevertheless, if power consumption can be reduced as the system control unit I 1 is in the sleep mode, it effectively helps improve heat dissipation for the personal computer. When the electronic device 1 is a notebook computer of using a supplement battery, it is critical to reduce power consumption of the system control unit 11 in the sleep mode, and thus to prolong lifetime of the supplement battery and enhance heat dissipation for the notebook computer. When the electronic device 1 is a PDA or e-book reader with power consumption of only several decades or hundreds of microampere (µA) in the sleep mode, nevertheless, if power supply is interrupted to allow the microprocessor or CPU of the electronic device 1 to be in a complete power-cut-off mode instead of the sleep mode, this further facilitates usage time of the electronic device 1.

### SUMMARY OF THE INVENTION

An objective of the present invention is to provide an energy-saving electronic device and an energy-saving method for use with the same, whereby a microprocessor or central processing unit (CPU) operates at a full speed under effect of an input signal, and is adapted to be in a complete power cut-off mode as the input signal terminates, instead of a sleep mode.

Another objective of the invention is to provide an energy-saving electronic device and an energy-saving method for use with the same, whereby under a triggering condition by an input signal, a trigger module produces a control pulse for allowing power to be provided for a microprocessor or CPU that in turn operates at a full speed; when the input signal ends and thus the control pulse terminates, power supply to the microprocessor or CPU is adapted to stop, thereby making the microprocessor or CPU in a complete power cut-off mode instead of a sleep mode.

In accordance with the foregoing and other objectives, the present invention proposes an energy-saving electronic device and an energy-saving method for use with the same. The energy-saving electronic device comprises: an input unit for allowing a user to input a signal thereto; a trigger module for receiving the input signal transmitted from the input unit, and urged by the input signal to generate a control pulse; a system-board module switch for receiving the control pulse from the trigger module, and adapted to be switched on by the control pulse, so as to allow a power module connected with the system-board module switch to supply power via the system-board module switch; a system board module having at least a processor, and for receiving power supplied from the power module via the system-board module switch so as to drive the processor to operate; a display control switch for receiving a signal generated from the processor, whereby the display control switch is adapted to be switched on by the signal for allowing the power module connected with the display control switch to supply power via the display control switch, and whereby the display control switch is adapted to be switched off by the signal, making power incapable of being supplied from the power module via the display control switch; and a display unit for receiving power supplied from the power module via the display control switch, so as to obtain and display data processed by the processor.

The energy-saving method for use with the above energy-saving electronic device, comprises the steps of: (1) inputting a signal to the input unit, and transmitting the input signal to the trigger module; (2) urging the trigger module to generate a control pulse by means of the input signal from the input unit, and transmitting the control pulse to the system-board module switch; (3) switching on the system-board module switch by means of the control pulse from the trigger module, whereby the power module connected with the system-board module switch supplies power to the system board module through the system-board module switch, so as to drive the processor of the system board module to operate; (4) generating a control signal via the processor during operation to the trigger module, for keeping the system-board module switch in a switching-on condition by means of the control signal, whereby the power module is adapted to stably supply power to the processor of the system board module through the system-board module switch; wherein during operation, the processor generates a signal to the display control switch for switching on the display control switch, so as to allow the power module connected with the display control switch to supply power to the display unit via the display control switch, and to allow the display unit to receive and display data processed by the processor; and (5) switching off the system-board module switch as the input signal ends and the control pulse from the trigger module and the control signal from the processor terminate, whereby power is incapable of being supplied from the power module to the system board module through the system-board module switch, and the processor is adapted to be in a power-cut-off mode; wherein the processor generates a signal to switch off the display control switch, and the power module is incapable of supplying power via the display control switch to the display unit, and the display unit is adapted to be in a power-cut-off mode.

The above energy-saving electronic device may be a personal digital assistant (PDA), electronic-book (e-book) reader, personal computer, notebook computer, etc. The input unit may be a keyboard, touch board, mouse, keys, ultrared input device, etc. The input unit may be a cathode-ray tube (CRT), liquid crystal display (LCD), e-paper display, e-ink display, supertwist LCD, thin-film transistor LCD, etc.

By using the above energy-saving electronic device and energy-saving method, under a triggering condition by an input signal, the trigger module produces a control pulse that urges the system-board module switch to be switched on, such that the processor of the system board module operates with power supplied from the power module through the system-board module switch. When the input signal ends and thus the control pulse terminates, the system-board module switch is adapted to be switched off with no power being provided from the power module to the system board module, thus making the processor in a complete power cut-off mode instead of a sleep mode in favor of power saving.

### BRIEF DESCRIPTION OF THE DRAWINGS

The present invention can be more fully understood by reading the following detailed description of the preferred embodiments, with reference made to the accompanying drawings wherein:
FIG. 1 (PRIOR ART) is a system block diagram showing basic architecture of a conventional electronic device;
FIG. 2 is a system block diagram showing basic architecture of an energy-saving electronic device according to a preferred embodiment of the invention;
FIG. 3 is a flowchart showing process steps of an energy-saving method in the use of the energy-saving electronic device shown in FIG. 2;
FIG. 4 is a system block diagram showing basic architecture of an energy-saving electronic device according to another preferred embodiment of the invention;
FIG. 5 is a flowchart showing process steps of an energy-saving method in the use of the energy-saving electronic device shown in FIG. 4;
FIG. 6 is a circuitry showing electrical connection between an input unit and a central processing unit of a system-board module of the energy-saving electronic device shown in FIG. 4;
FIG. 7 is a circuitry of a trigger circuit of the energy-saving electronic device shown in FIG. 4;
FIG. 8 is a time sequence diagram showing working schedules of the trigger circuit of the energy-saving electronic device shown in FIG. 4; and
FIG. 9 is a flowchart showing coordinate operation between the trigger circuit and the central processing unit shown in FIG. 7.

### DETAILED DESCRIPTION OF THE PREFERRED EMBODIMENT

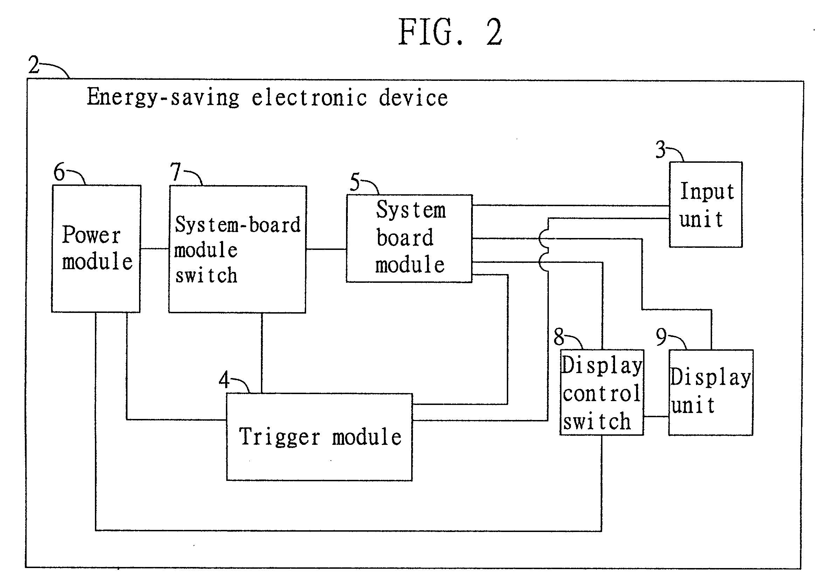

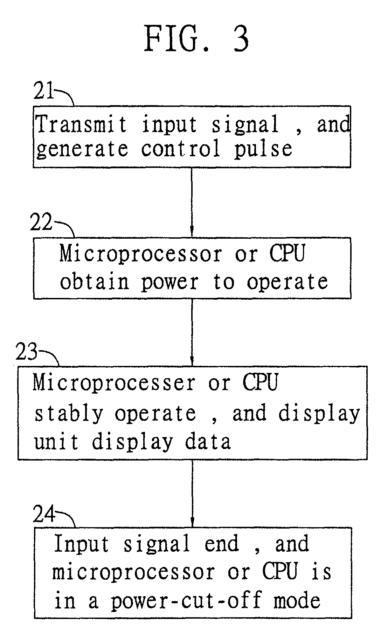

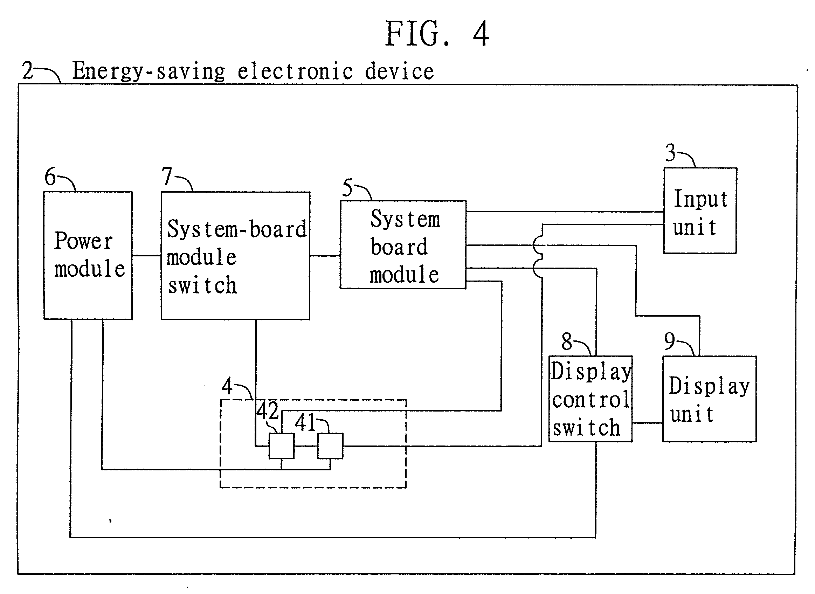

FIG. 2 illustrates basic architecture of an energy-saving electronic device according to a preferred embodiment of the invention. As shown in the drawing, the energy-saving electronic device 2 is composed of a plurality of electrically interconnected components, including an input unit 3, a trigger module 4, a system board module 5 having a microprocessor or central processing unit (CPU), a power module 6, a system-board module switch 7, a display control switch 8, and a display unit 9.

The input unit 3 is connected with the trigger module 4 and the system board module 5, for transmitting an input signal to the trigger module 4 and the system board module 5. The input unit 3 may be a keyboard, touch board, mouse, ultrared input device, etc.

The trigger module 4 receives the input signal from the input unit 3, and thus triggers operation of the system board module 5, power module 6 and system-board module switch 7 that are connected to the trigger module 4.

The system board module 5 having the microprocessor or CPU is triggered by the trigger module 4 in a manner as to allow the microprocessor or CPU to operate at a full speed for performing electrical functions provided by the energy-saving electronic device 2.

The power module 6 is connected to the system-board module switch 7, and used to supply power to the energy-saving electronic device 2 for operation need. As the system-board module switch 7 is switched on, the power module 6 provides power for the microprocessor or CPU of the system board module 5, such that the microprocessor or CPU can operate at a full speed.

The system-board module switch 7 is connected to the system board module 5 having the microprocessor or CPU. As the system-board module switch 7 is switched on, the system board module 5 is supplied with power via the power module 6, so as to allow the microprocessor or CPU to operate at a full speed.

Under a triggering conduction by the input signal from the input unit 3, the trigger module 4 produces a control pulse that urges the system-board module switch 7 to be switched on, and power is supplied from the power module 6 through the system-board module switch 7 to the system board module 5, whereby the microprocessor or CPU of the system board module 5 can operate at a full speed. In the meantime, the microprocessor or CPU forwards a control signal to the trigger module 4 for keeping the system-board module switch 7 in a stable switching-on condition. When the input signal ends and thus the control pulse from the trigger module 4 terminates, the microprocessor or CPU responsively stops sending the control signal to the trigger module 4, and thereby the system-board module switch 7 is adapted to be switched off under a condition of no control pulse or control signal, such that no power is capable of being provided from the power module 6 to the microprocessor or CPU, thus making the microprocessor or CPU in a complete power cut-off mode instead of a sleep mode in favor of power saving for the energy-saving electronic device 2.

The display control switch 8 is connected to the system board module 5 and the display unit 9. When the microprocessor or CPU of the system board module 5 operates at a full speed, it forwards a signal to the display control switch 8 so as to switch on the display control switch 8, and the power module 6 can supply power to the display unit 9 via the switched-on display control switch 8, for allowing the display unit 9 to display pictures thereon. When the microprocessor or CPU of the system board module 5 is in a power-cut-off mode, it forwards another signal to the display control switch 8 so as to switch off the display control switch 8, and thus, power cannot be provided from the power module 6 via the switched-off display control switch 8 to the display unit 9, thereby making the display unit 9 in the power-cut-off mode to reduce power consumption of the energy-saving electronic device 2.

The display unit 9 is signal-controlled by the system board module 5 for picture display. The display unit 9 may be a cathode-ray tube (CRT), liquid crystal display (LCD), e-paper display, e-ink display, etc.

An example of the energy-saving electronic device 2 is personal digital assistant (PDA), wherein the input unit 3 may be keys or a manual touch pen, the trigger module 4 is a microprocessor with power consumption of approximately several decades of microampere (µA), the system board module 5 has a CPU to perform desired functions designated for the PDA, and the display unit 9 may be a touch supertwist LCD or a touch thin-film transistor LCD. These PDA components operate as described above, and no further details are to be repeated herein.

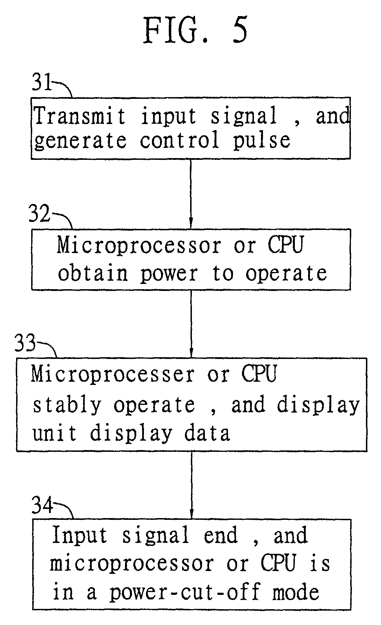

FIG. 3 illustrates process steps of an energy-saving method in the use of the energy-saving electronic device 2 shown in FIG. 2. As shown in FIG. 3, first in step 21, the input unit 3 forwards an input signal to the trigger module 4, whereby the trigger module 4 generates a control pulse under a triggering condition by the input signal. Then, it proceeds to step 22.

In step 22, the system-board module switch 7 is switched on by the control pulse generated from the trigger module 4, so as to allow power to be supplied from the power module 6 to the system board module 5 via the switched-on system-board module switch 7. Thereby, a microprocessor or CPU of the system board module 5 with the supplied power is adapted to operate at a full speed. Then, it proceeds to step 23.

In step 23, during effect of the control pulse, the microprocessor or CPU of the system board module 5 sends a control signal to the trigger module 4 for keeping the system-board module switch 7 in a stable switching-on condition, such that the power module 6 can supply power via the system-board module switch 7 for allowing the microprocessor or CPU to operate stably. Moreover, during operation of the microprocessor or CPU, it forwards a signal to the display control switch 8 in a manner that, the display control switch 8 is adapted to be switched on, and thus power can be provided from the power module 6 to the display unit 9 via the display control switch 8. The display unit 9 then receives and displays data processed by the microprocessor or CPU. Thereafter, it proceeds to step 24.

In step 24, when the input signal ends and thus the control pulse from the trigger module 4 terminates, the microprocessor or CPU responsively stops sending the control signal to the trigger module 4, and thereby the system-board module switch 7 is adapted to be switched off under a condition of no control pulse or control signal, such that no power is capable of being provided from the power module 6 to the microprocessor or CPU, thus making the microprocessor or CPU in a complete power cut-off mode instead of a sleep mode in favor of power saving for the energy-saving electronic device 2. Moreover, also when the microprocessor or CPU detects ending of the input signal, it forwards another signal to the display control switch 8 in a manner as to switch off the display control switch 8, and thus power cannot be supplied from the power module 6 to the display unit 7 via the switched-off display control switch 8, thereby making the display unit 9 also in the power cut-off mode in favor of power saving.

FIG. 4 illustrates basic architecture of an energy-saving electronic device according to another preferred embodiment of the invention. This energy-saving electronic device 2 is characterized with the trigger module 4 having a trigger circuit 41 and a logic control circuit 42. An example of this energy-saving electronic device 2 is an e-book reader, wherein the input unit 3 may be keys or a keyboard, and the display unit 9 may be a LCD, e-paper display or e-ink display.

The trigger circuit 41 of the trigger module 4 is used to receive an input signal from the input unit 3 and thus to generate a control pulse that is to be transmitted to the logic control circuit 42. By effect of the control pulse, the logic control circuit 42 is prompted to switch on the system-board module switch 7, so as to allow the power module 6 to supply power via the switched-on system-board module switch 7 to the system board module 5 having a microprocessor or CPU that is urged to operate at a full speed. During provision of the control pulse, the microprocessor or CPU sends a control signal to the logic control circuit 42 for keeping the system-board module switch 7 in a stable switching-on condition. When the input signal ends and thus the control pulse from the trigger circuit 41 terminates, the microprocessor or CPU stops sending the control signal to the logic control circuit 42, and thereby the system-board module switch 7 is adapted to be switched off under a condition of no control pulse or control signal, such that no power is capable of being provided from the power module 6 to the microprocessor or CPU, thus making the microprocessor or CPU in a complete power cut-off mode.

In the case of the energy-saving electronic device 2 being a personal computer or notebook computer, its structural architecture and operation are similar to those described above for the PDA and e-book reader with reference to FIGs. 2 and 4, and thereby not to be further detailed herein.

FIG. 5 illustrates process steps of an energy-saving method in the use of the energy-saving electronic device 2 shown in FIG. 4. As shown in FIG. 5, first in step 31, the input unit 3 forwards an input signal to the trigger module 4, whereby the trigger circuit 41 generates a control pulse under a triggering condition by the input signal, and transmits the control pulse to the logic control circuit 42. Then, it proceeds to step 32.

In step 32, upon receiving the control pulse, the logic control circuit 42 is prompted to switch on the system-board module switch 7, and thus power can be supplied from the power module 6 via the switched-on system-board module switch 7 to a microprocessor or CPU of the system board module 5, allowing the microprocessor or CPU supplied with power to operate at a full speed. Then, it proceeds to step 33.

In step 33, during effect of the control pulse, the microprocessor or CPU of the system board module 5 sends a control signal to the logic control circuit 42 for keeping the system-board module switch 7 in a stable switching-on condition, such that the power module 6 can supply power via the system-board module switch 7 for allowing the microprocessor or CPU to operate stably. Moreover, during operation of the microprocessor or CPU, it forwards a signal to the display control switch 8 in a manner that, the display control switch 8 is adapted to be switched on, and thus power can be provided from the power module 6 to the display unit 9 via the display control switch 8. The display unit 9 then receives and displays data processed by the microprocessor or CPU. Thereafter, it proceeds to step 34.

In step 34, when the input signal ends and thus the control pulse from the trigger circuit 41 terminates, the microprocessor or CPU responsively stops sending the control signal to the logic control circuit 42, and thereby the system-board module switch 7 is adapted to be switched off under a condition of no control pulse or control signal, such that no power is capable of being provided from the power module 6 to the microprocessor or CPU, thus making the microprocessor or CPU in a complete power cut-off mode instead of a sleep mode. Moreover, also when the microprocessor or CPU detects ending of the input signal, it forwards another signal to the display control switch 8 in a manner as to switch off the display control switch 8, and thus power cannot be supplied from the power module 6 to the display unit 7 via the switched-off display control switch 8, thereby making the display unit 9 also in the power cut-off mode in favor of power saving.

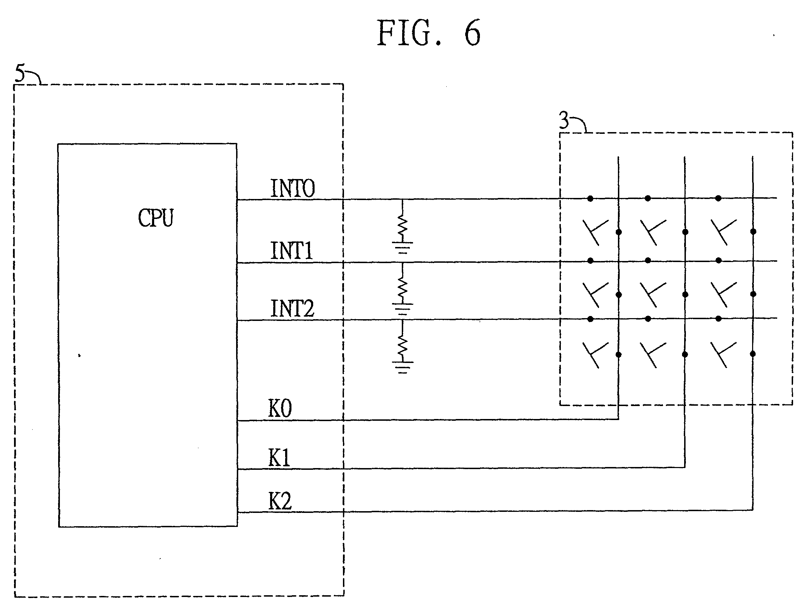

FIG. 6 illustrates electrical connection between a key matrix of the input unit 3 (such as a keyboard or keys) and a CPU of the system-board module 5 of the energy-saving electronic device 2 shown in FIG. 4. As shown in FIG. 6, during operation of the CPU of the system-board module 5, with keys of the input unit 3 being pressed, interrupt signals INT0, INT1, INT2 are generated from the pressed keys and transmitted to the CPU, whereby corresponding pins k0, k1, k2 of the CPU pre-set at high potential are adapted to be of low potential, so as to determine what keys of the input unit 3 are being pressed.

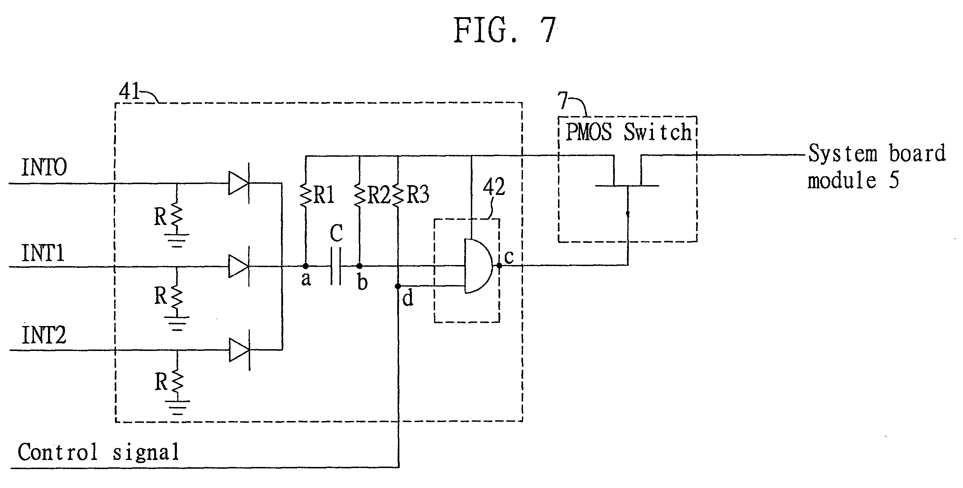

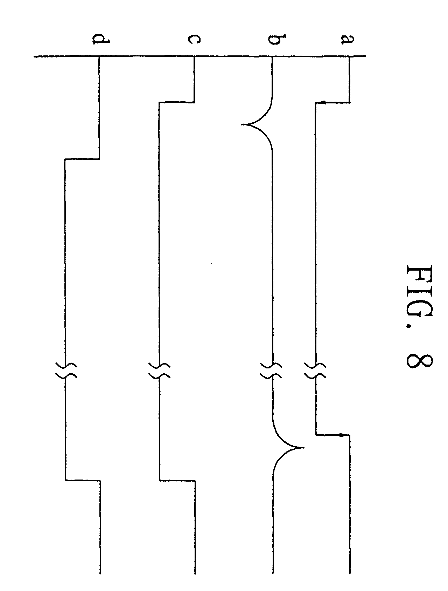

FIG. 7 illustrates the trigger circuit 41 of the energy-saving electronic device 2 shown in FIG. 4; FIG. 8 illustrates time sequences of the trigger circuit 41 of the energy-saving electronic device 2 shown in FIG. 4. As shown in FIGs. 7 and 8, when keys of the input unit 3 are pressed, pull down resistance of the interrupt signal INT0 of the CPU urges the trigger circuit 41 to generate falling edge at point a shown in FIG. 8. After being charged by resistance R2 and capacitance C, the trigger circuit 41 is induced with waveform at point b shown in FIG. 8; waveform at point b initiates later than waveform at point a due to charging performance. Moreover, with rectification by an AND gate (i.e. logic control circuit 42), a logic low signal is produced at point c shown in FIG. 8; this logic low signal allows a PMOS switch (P-channel metal-oxide semiconductor, i.e. system-board module switch 7) to be switched on, making the system board module 5 obtain power from the power module 6 via the switched-on system-board module switch (PMOS switch) 7. In the meantime, the CPU of the system board module 5 generates a control signal (i.e. a low signal at point d shown in FIG. 8) for keeping the PMOS switch 7 in a stable switching-on conduction, and thus for allowing the power module 6 to stable supply power to the CPU. When the CPU completes its operation, points b, c, d are adapted to be of high potential, thereby making the PMOS switch 7 switched off and not able to mediate power supply from the power module 6 to the system board module 5, such that the CPU is in a complete power-cut-off mode.

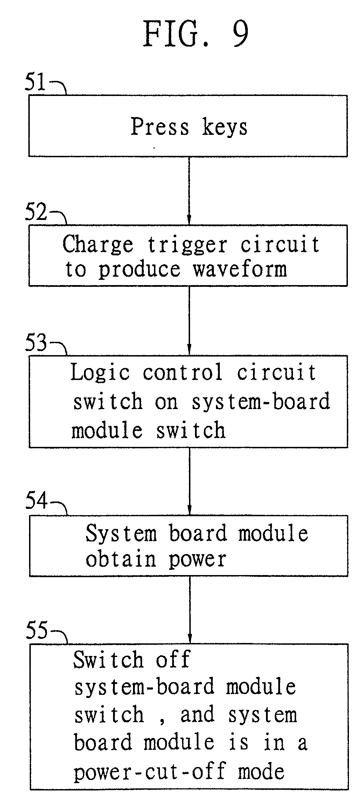

FIG. 9 illustrates coordinate operation between the trigger circuit 41 and the CPU of the energy-saving electronic device 2 shown in FIG. 7; the following description is made in accompany with reference to FIGs. 7 and 8. As shown in FIGs. 7, 8 and 9, first in step 51, when keys of the input unit 3 are pressed, pull down resistance of the interrupt signal INT0 of the CPU urges the trigger circuit 41 to generate falling edge at point a. Then, it proceeds to step 52.

In step 52, after being charged by resistance R2 and capacitance C, the trigger circuit 41 is induced with waveform at point b (an input point of the logic control circuit 42), as shown in FIG. 8; waveform at point b initiates later than waveform at point a due to charging performance. Then, it proceeds to step 53.

In step 53, with rectification by an AND gate (i.e. logic control circuit 42), a logic low signal is produced at point c (an output point of the logic control circuit 42); this logic low signal allows a PMOS switch (i.e. system-board module switch 7) to be switched on, making the system board module 5 obtain power from the power module 6 via the switched-on system-board module switch (PMOS switch) 7. Thereafter, it proceeds to step 54.

In step 54, as the system board module 5 is supplied with power, the CPU of the system board module 5 generates a control signal (i.e. a low signal at point d) for keeping the PMOS switch 7 in a stable switching-on conduction, and thus for allowing the power module 6 to stable supply power to the CPU. Then, it proceeds to step 55.

In step 55, when the CPU completes its operation, points b, c, d are adapted to be of high potential, thereby making the PMOS switch 7 switched off and not able to mediate power supply from the power module 6 to the system board module 5, such that the CPU is in a complete power-cut-off mode.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. An energy-saving electronic device, comprising:
an input unit for allowing a user to input a signal thereto;
a trigger module for receiving the input signal transmitted from the input unit, and urged by the input signal to generate a control pulse;
a system-board module switch for receiving the control pulse from the trigger module, and adapted to be switched on by the control pulse, so as to allow a power module connected with the system-board module switch to supply power via the system-board module switch; and
a system board module having at least a processor, and for receiving power supplied from the power module via the system-board module switch so as to drive the processor to operate.

2. The energy-saving electronic device of claim 1, further comprising:
a display control switch for receiving a signal generated from the processor, whereby the display control switch is adapted to be switched on by the signal for allowing the power module connected with the display control switch to supply power via the display control switch, and whereby the display control switch is adapted to be switched off by the signal, making power incapable of being supplied from the power module via the display control switch; and
a display unit for receiving power supplied from the power module via the display control switch, so as to obtain and display data processed by the processor.

3. The energy-saving electronic device of claim 2, wherein during operation, the processor generates a control signal to the trigger module for keeping the system-board module switch in a stable switching-on condition, so as to allow the power module to stably supply power via the system-board module switch.

4. The energy-saving electronic device of claim 3, wherein when the input signal ends, and thus the control pulse from the trigger module and the control signal from the processor terminate, the system-board module switch is adapted to be switched off, and the processor generates a signal to the display control switch for switching off the display control switch, such that power is incapable of being supplied from the power module to the system board module and the display unit via the system-board module switch and the display control switch, and the processor and the display unit are adapted to be in a power-cut-off mode.

5. The energy-saving electronic device of claim 1, wherein the trigger module comprises:
a trigger circuit for receiving the input signal from the input unit, and urged by the input signal to generate the control pulse that is transmitted to a logic control circuit connected with the trigger circuit; and
the logic control circuit for receiving the control pulse from trigger circuit, and for switching on the system-board module switch by means of the control pulse, allowing the power module to supply power via the system-board module switch.

6. The energy-saving electronic device of claim 1, wherein the processor is at least one selected from the group consisting of microprocessor and central processing unit (CPU).

7. The energy-saving electronic device of claim 5, wherein the trigger module is a microprocessor, and the processor is a CPU.

8. The energy-saving electronic device of claim 1, wherein the energy-saving electronic device is at least one from the group consisting of personal digital assistant (PDA), electronic-book (e-book) reader, personal computer and notebook computer.

9. The energy-saving electronic device of claim 1, wherein the input unit is at least one from the group consisting of keyboard, touch board, mouse, keys and ultrared input device.

10. An energy-saving method for use with an energy-saving electronic device, wherein the energy-saving electronic device at least includes an input unit, a trigger module, a system board module having at least a processor, a power module and a system-board module switch; the energy-saving method comprising the steps of:
(1) inputting a signal to the input unit, and transmitting the input signal to the trigger module;
(2) urging the trigger module to generate a control pulse by means of the input signal from the input unit, and transmitting the control pulse to the system-board module switch;
(3) switching on the system-board module switch by means of the control pulse from the trigger module, whereby the power module connected with the system-board module switch supplies power to the system board module through the system-board module switch, so as to drive the processor of the system board module to operate;
(4) generating a control signal via the processor during operation to the trigger module, for keeping the system-board module switch in a switching-on condition by means of the control signal, whereby the power module is adapted to stably supply power to the processor of the system board module; and
(5) switching off the system-board module switch as the input signal ends and the control pulse from the trigger module and the control signal from the processor terminate, whereby power is incapable of being supplied from the power module to the system board module via the system-board module switch, and the processor is adapted to be in a power-cut-off mode.

11. The energy-saving method of claim 10, wherein the trigger module comprises:
a trigger circuit for receiving the input signal from the input unit, and urged by the input signal to generate the control pulse that is transmitted to a logic control circuit connected with the trigger circuit; and
the logic control circuit for receiving the control pulse from trigger circuit, and for switching on the system-board module switch by means of the control pulse, allowing the power module to supply power via the system-board module switch.

12. The energy-saving method of claim 10, wherein the processor is at least one selected from the group consisting of microprocessor and CPU.

13. The energy-saving method of claim 11, wherein the trigger module is a microprocessor, and the processor is a CPU.

14. The energy-saving method of claim 10, wherein the input unit is at least one from the group consisting of keyboard, touch board, mouse, keys and ultrared input device.

15. An energy-saving method for use with an energy-saving electronic device, wherein the energy-saving electronic device at least includes an input unit, a trigger module, a system board module having at least a processor, a power module, a system-board module switch, a display control switch and a display unit; the energy-saving method comprising the steps of:
(1) inputting a signal to the input unit, and transmitting the input signal to the trigger module;
(2) urging the trigger module to generate a control pulse by means of the input signal from the input unit, and transmitting the control pulse to the system-board module switch;
(3) switching on the system-board module switch by means of the control pulse from the trigger module, whereby the power module connected with the system-board module switch supplies power to the system board module through the system-board module switch, so as to drive the processor of the system board module to operate;
(4) generating a control signal via the processor during operation to the trigger module, for keeping the system-board module switch in a switching-on condition by means of the control signal, whereby the power module is adapted to stably supply power to the processor of the system board module through the system-board module switch; wherein during operation, the processor generates a signal to the display control switch for switching on the display control switch, so as to allow the power module connected with the display control switch to supply power to the display unit via the display control switch, and to allow the display unit to receive and display data processed by the processor; and
(5) switching off the system-board module switch as the input signal ends and the control pulse from the trigger module and the control signal from the processor terminate, whereby power is incapable of being supplied from the power module to the system board module through the system-board module switch, and the processor is adapted to be in a power-cut-off mode; wherein the processor generates a signal to switch off the display control switch, and the power module is incapable of supplying power via the display control switch to the display unit, and the display unit is adapted to be in a power-cut-off mode.

16. The energy-saving method of claim 15, wherein the trigger module comprises:
a trigger circuit for receiving the input signal from the input unit, and urged by the input signal to generate the control pulse that is transmitted to a logic control circuit connected with the trigger circuit; and
the logic control circuit for receiving the control pulse from trigger circuit, and for switching on the system-board module switch by means of the control pulse, allowing the power module to supply power via the system-board module switch.

17. The energy-saving method of claim 15, wherein the processor is at least one selected from the group consisting of microprocessor and CPU.

18. The energy-saving method of claim 16, wherein the trigger module is a microprocessor, and the processor is a CPU

19. The energy-saving method of claim 15, wherein the input unit is at least one from the group consisting of keyboard, touch board, mouse, keys and ultrared input device.

20. The energy-saving method of claim 15, wherein the energy-saving electronic device is at least one from the group consisting of personal digital assistant (PDA), electronic-book (e-book) reader, personal computer and notebook computer.
